# EUROPEAN PATENT APPLICATION

(11) **EP 1 582 577 A1**
(43) Date of publication of application: **05.10.2005**
(21) Application number: 04101328.5
(22) Date of filing: 31.03.2004
(51) Int. Cl.: C09K 5/04

(54) **Method for heating or cooling and refrigerant compositions**

(71) Applicant: SOLVAY (Société Anonyme), 1050 Bruxelles (BE)
(72) Inventor: Flohr, Felix, 31134 Hildesheim (DE); Meurer, Christoph, 30161 Hannover (DE); Schwiegel, Martin, 30167 Hannover (DE)
(74) Representative: Jacques, Philippe

(57) **Abstract**

A method for heating or cooling, wherein R507 (1,1,1-trifluoroethane/pentafluoroethane 50±1%/50±1% by weight) is used as replacement fluid in a heating or cooling equipment specifically designed for use with R404A (1,1,1-trifluoroethane/pentafluoroethane/1,1,1,2-tetrafluoroethane 52+1%/44+2%/4+2% by weight).

## Description

The present invention relates to a method for heating or cooling and refrigerant compositions.

The invention is useful, for example, for cooling of commercial surfaces such as supermarkets, cold stores, industrial cooling, e.g. cooling during industrial manufacturing processes, in particular in the food industry, cooling during transport of goods, e.g. cooling of ship, containers or lorries, or for residential air conditioning, e.g. in high buildings.

R404A (1,1,1-trifluoroethane/pentafluoroethane/1,1,1,2-tetrafluoroethane 52±1%/44±2%/4±2% by weight) has been proposed as non ozone-depleting refrigerant (see EP-A-545942) and can be used in applications such as mentioned before. Installations are frequently labelled as being restricted to use of that mixture and are thus considered to be specifically designed for use with said refrigerant. However, that mixture might not be always available, e.g. when it is necessary to fill up an installation after leakage. In addition, the performance of the apparatus might still be subject to improvement.

It was desirable to find a method for cooling or heating which can be safely used with equipment designed for use with R404A, while allowing for improved flexibility as to availability of refrigerant and improved performance.

The invention concerns, in consequence, a method for heating or cooling, wherein R507 (1,1,1-trifluoroethane/pentafluoroethane 50±1%/50±1% by weight) is used as replacement fluid for R404A in a heating or cooling equipment specifically designed for use with R404A (1,1,1-trifluoroethane/pentafluoroethane/1,1,1,2-tetrafluoroethane 52±1%/44±2%/4±2% by weight).

"Equipment specifically designed for use with R404A" is understood to denote in particular any equipment which has been installed for use and/or used with R404A. More particularly, the expression is understood to denote any equipment which contains R404A and is labelled as such.

In the method according to the invention, all parts of the heating or cooling equipment are generally rated for a maximum discharge pressure of 25 to 30 bar at a specified design temperature of 55°C. Often this maximum pressure is equal to about 25,5 bar preferably equal to about 26 bar.

The method according to the invention can be carried out during a useful service life of the equipment at least equal to the useful service life when using the equipment with R404A. Generally the ratio of useful service life with R507 to useful service life with R404A is from 0.9 to 1.2, more particularly from 0.95-1.05.

In the method according to the invention, when using R507, the operating time of the equipment required to achieve a desired cooling or heating effect is generally at most equal to and often less than the operating time required with R404A.

In the method according to the invention, the ratio of the coefficient of performance when using R507 (COP_{R507}) to the coefficient of performance when using R404A (COP_{R404A}) is generally from 1.002 to 1.025. It has been found, surprisingly, that contrary to theoretical predictions, R507 gives a better coefficient of performance than R404A when used in a system specifically designed for use with R404A, even at high condensation temperatures Tc.

Typical Tc at which the surprising beneficial effect is achieved are at least 40°C, often at least 50°C sometimes from about 55°C to about 65°C.

In the method according to the invention, the ratio of capacity when using R507 (Q_{R507}) to the capacity when using R404A (Q_{R404A}) is generally from 1.002 to 1.05 and preferably from 1.022 to 1.044.

In the method according to the invention, the ratio of the ratio condensation pressure to evaporation pressure when using R507 (P_{R507}) to ratio of the ratio condensation pressure to evaporation pressure when using R404A (P_{R404A}) (P_{R507}/ P_{R404A}) is generally equal to or less than about 1. Often (P_{R507}/ P_{R404A}) is equal to or less than about 0.98 and preferably equal to about 0.97.

In a first particular embodiment of the method according to the invention, R507 is filled into an empty equipment or R404A present in the equipment is totally replaced by R507.

In a second particular embodiment of the method according to the invention, R404A present in the equipment is partially replaced by R507.

In this embodiment, R404A present in the equipment is generally replaced portionwise by R507. In this case, a R507 portion supplied to the equipment accounts generally for at least 1% by weight relative to the total weight of refrigerant contained in the equipment before supply of said portion. Preferably the R507 portion supplied to the equipment accounts generally for at least 2% by weight, as defined before. In this case, a R507 portion supplied to the equipment accounts generally for at most 50% by weight relative to the total weight of refrigerant contained in the equipment before supply of said portion. Preferably the R507 portion supplied to the equipment accounts generally for at most 20% by weight, as defined before.

In a first mode of the second particular embodiment, R404A is successively replaced by R507 until the specification of R507 is reached.

In a second mode of the second particular embodiment, after supplying at least 1 portion of R507, successive replacements are carried out with either R507 or R404A.

It has been found that installations specifically designed for R404A can operate an efficient and safe manner while containing a refrigerant which corresponds neither to the R404A specification nor to the R507 specification.

The invention concerns in consequence also a refrigerant composition consisting essentially of 49-53% wt. 1,1,1-trifluoroethane, >45-50.9% wt.% pentafluoroethane and 0.1-<2% 1,1,1,2-tetrafluoroethane. Preferably, the refrigerant composition according to the invention consists essentially of 49-52% wt. 1,1,1-trifluoroethane, >47-50.5% wt.% pentafluoroethane and 0.5-1% wt. 1,1,1,2-tetrafluoroethane.

The example hereafter illustrates the invention in a non limitative manner.

### Test rig

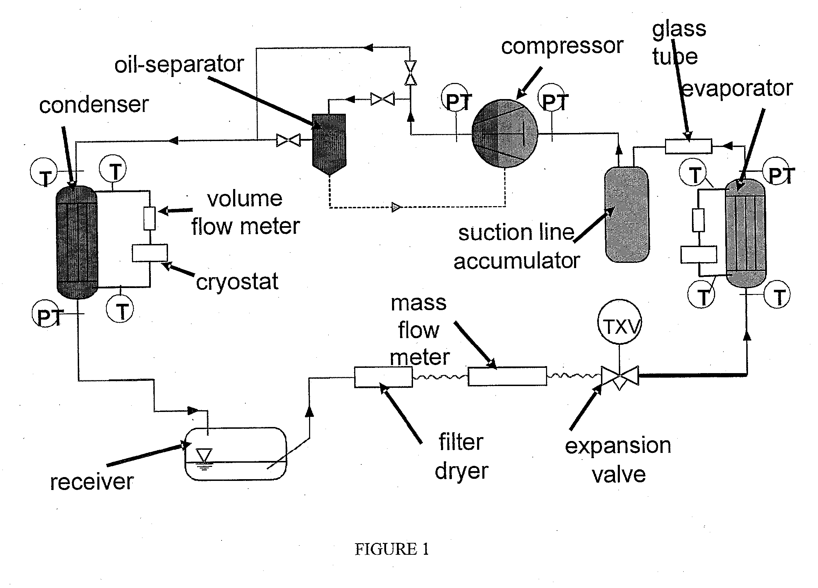

The set up of the test rig is depicted in figure 1. It consisted of a single stage refrigeration cycle with compressor, condenser (refrigerant / heat transfer fluid), thermostatic expansion valve (TXV) and evaporator (refrigerant / heat transfer fluid). Both heat exchangers (HX) were connected to thermostats which neutralize the thermal loads of the system - in simpler terms they heat the evaporator and cool the condenser. In order to carry out capacity measurements the test rig was equipped with:
- Thermometers before and behind both heat exchangers, on the secondary and primary loops.
- Volume-flow-meters for the mass flow determination of both secondary circuits
- Mass-flow-meter for the estimation of the mass flow of the refrigerant
- Electrical power sensor for the measurement of the compressor capacity

Additional thermometers were installed in the refrigerant line before and behind the compressor, before the thermostatic expansion valve and outside the test rig within the room for ambient temperature measurements. Pressure gauges are installed behind the heat exchangers (evaporator/condenser) and before and behind the compressor. The nominal R404A charge of the unit was 12kg.

Figure 1 shows the flowchart of the Test rig

### Description of the Components

All components which were used for setting up the refrigeration circuit of the test rig where commonly available refrigeration parts which where purchased through general wholesale. The compressor was semi-hermetic reciprocating with a swept volume of approx 18 m³/h at 1450 rpm. It is charged with POE lubricant (ISO VG 32). The expansion device is thermostatic. No alterations were done to the setting of the superheat. Both heat exchangers were shell and tube type. For reasons of flexibility - the test rig is modified rather frequently - all piping is stainless steel with screwed connections. Suction line accumulator, oil separator and receiver were standard "off the shelf" refrigeration components.

### Test Procedure

The nameplate charge of R404A was filled into the system after detailed analysis of the refrigerant. The refrigerant blend was weighed in from its components prior to charging in order to have the highest possible accuracy with respect to the composition.

Reference values for an evaporation temperature of -30°C and condensing temperatures of 35°C, 40°C and 45°C were recorded. Adjustment of the operating temperatures (evaporation and condensation) was achieved by modification of the secondary circuits. Measurements were recorded after steady state conditions were observed for the test rig parameters. After reaching steady state operation, 60 data sets (all temperatures, pressures, flow rates, etc) with a recording interval of 10 sec. served for producing mean values which then represent the measured values.

After collection of a complete set measurement points the system was brought to standstill and 3kg of refrigerant was removed from a valve located in the discharge line of the system. This location served as the simulated leak. It is understood that under field conditions leaks will occur constantly over time and at arbitrary locations within a given system. A leak on the discharge side however is a probable location (high pressure, flexible hoses). It is further anticipated that a "real world" leak scenario would not influence the results substantially.

The removed refrigerant was analyzed and the unit was topped up with 3kg of R507. The R507 was prepared gravimetrically and analyzed beforehand. The system was operated at standard operating conditions for at least 30 minutes in order to achieve good mixing of the refrigerant charge. After this analysis the test run described above was repeated to collect a full measurement set and evaluate the performance of the system.

The whole procedure was repeated until the remaining charge in the system was within the specification of R507 (R125/ R143a 50/50 % by wt; ±1% for each component). A total of 10 leak / refill steps were necessary to achieve this.

### Test results

The test results were divided into results of the GC analysis of the withdrawn refrigerant and the capacity / COP measurements during the test runs.

### Refrigerant composition

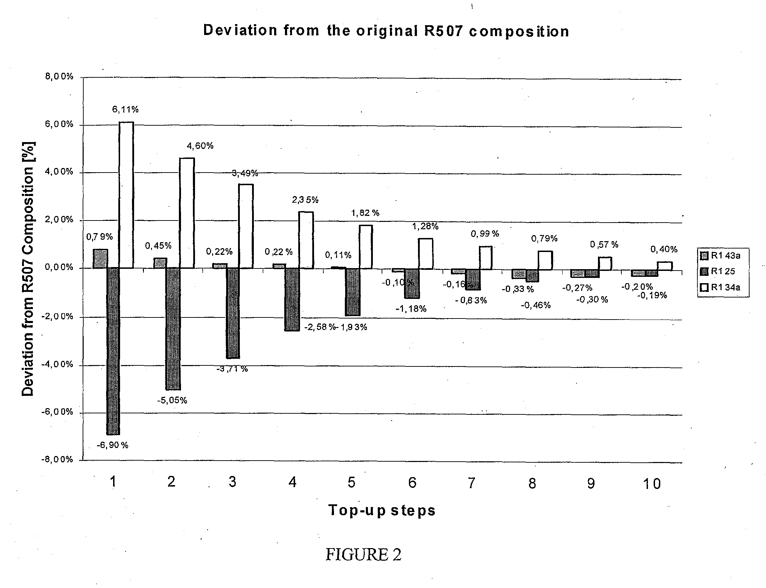

Figure 2 depicts the development in the composition change.

Figure 2 shows the development of the refrigerant composition within the test rig

The analysis of refill step1 shows a R404A blend with a slightly enriched R134a share which is 0.1 % above the specification. Figure 2 shows that due to the simulated leaks and top-ups with R507 the refrigerant composition in the test rig is continuously changed from R404A to R507. With the 10th step the share of R134a is below 0.5% and the refrigerant composition is within the R507 specification.

### Capacity Qo

The capacity values were generated from measured values of the secondary loop. These values were in excellent agreement with the data from the primary (refrigerant) circuit which have been generated as well and which served a control function.

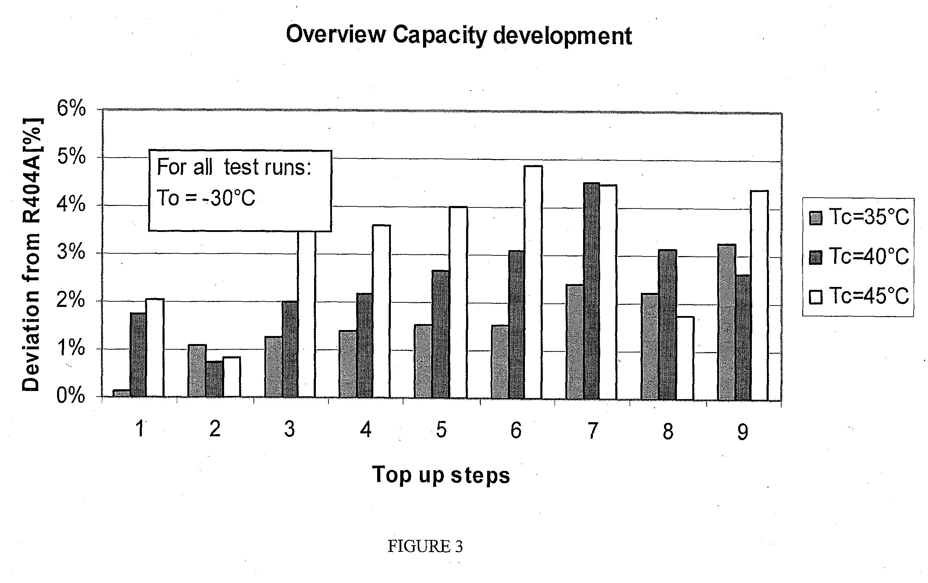

Figure 3 provides an overview of the results.

Figure 3 shows an overview of Qo measurements

A clear increase of capacities was observed.

### Coefficient of performance (COP)

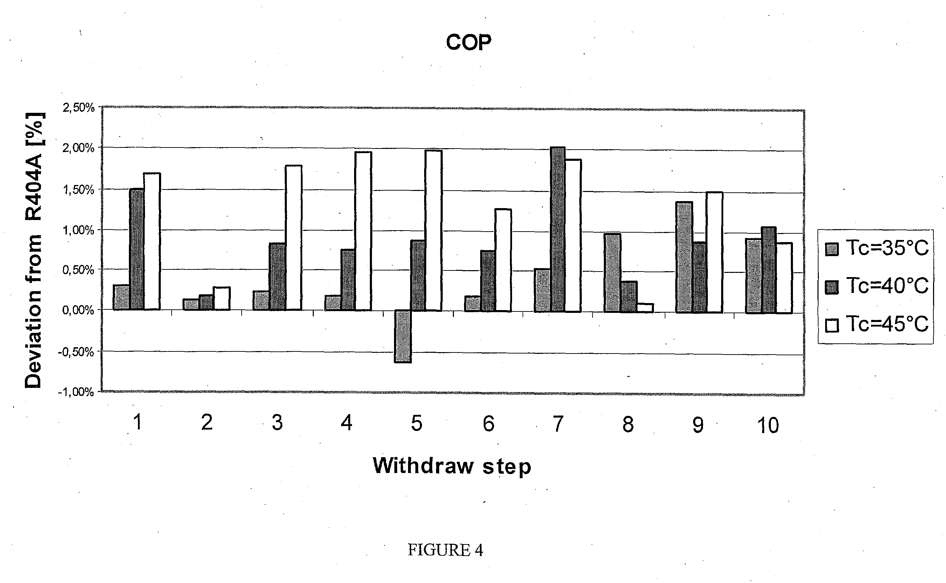

Figure 4 shows the COP Deviation compared to R404A

Also with respect to energy efficiency the system appears to benefit from the change to R507.

### Operating conditions

The operating pressures increased slightly with decreasing R134a content of the circulating refrigerant blend. At condensing pressures of 45°C the condensing pressures increased by as much as 2.5% after completion of the "morphing". As described earlier the employed component -standard retail material- where rated for these higher pressures.

### Conclusion

It was demonstrated that a refill of a R404A leakage with R507 is beneficial for the cooling capacity and the efficiency of the complete system. The composition of the system charge changes smoothly towards the R507 specification. This specification was achieved after 10 consecutive top-ups of 3kg each. High condensing temperatures support the capacity increase (up to 5.19% at Tc=45°C) in comparison to lower temperatures (2.67% at Tc=35°C). The change of efficiency was less pronounced but visible. The system operated without any problems at all times during the test. Operating pressures increased by theoretically simulated values (approximately 2.5% for discharge pressure).

## Claims

1. A method for heating or cooling, wherein R507 (1,1,1-trifluoroethane/pentafluoroethane 50±1%/50±1% by weight) is used as replacement fluid for R404A in a heating or cooling equipment specifically designed for use with R404A (1,1,1-trifluoroethane/pentafluoroethane/1,1,1,2-tetrafluoroethane 52±1%/44±2%/4±2% by weight).

2. The method according to claim 1, wherein all parts of the heating or cooling equipment are rated for a maximum pressure of 25 to 30 bar.

3. The method according to claim 2, wherein the maximum pressure is equal to about 26 bar.

4. The method according to anyone of claims 1 to 3, which is carried out during a useful service life of the equipment at least equal to the useful service life when using the equipment with R404A.

5. The method according to anyone of claims 1 to 4, wherein the ratio of the coefficient of performance when using R507 (COP_{R507}) to the coefficient of performance when using R404A (COP_{R404A}) is from 1.002 to 1.025.

6. The method according to anyone of claims 1 to 5, wherein the ratio of capacity when using R507 (Q_{R507}) to the capacity when using R404A (Q_{R404A}) is from 1.002 to 1.05.

7. The method according to anyone of claims 1 to 6, wherein R507 is filled into an empty equipment or wherein the R404A present in the equipment is totally replaced by R507.

8. The method according to anyone of claims 1 to 6, wherein R404A present in the equipment is partially replaced by R507.

9. The method according to claim 8, wherein R404A present in the equipment is replaced portionwise by R507.

10. A refrigerant composition consisting essentially of 49-53% wt. 1,1,1-trifluoroethane, >45-50.9% wt.% pentafluoroethane and 0.1-<2% 1,1,1,2-tetrafluoroethane.

11. The refrigerant composition according to claim 10 consisting essentially of 49-52% wt. 1,1,1-trifluoroethane, >47-50.5% wt.% pentafluoroethane and 0.5-1% wt. 1,1,1,2-tetrafluoroethane.
